# EUROPÄISCHE PATENTSCHRIFT

(11) **EP 0 985 477 B1**
(45) Veröffentlichungstag und Bekanntmachung des Hinweises auf die Patenterteilung: **23.01.2002**
(21) Anmeldenummer: 98117129.1
(22) Anmeldetag: 10.09.1998
(51) Int. Cl.: B23B 31/12

(54) **Werkstückspannvorrichtung**
Chuck
Dispositif de serrage

(43) Veröffentlichungstag der Anmeldung: 15.03.2000
(73) Patentinhaber: Christ-Noss, Marianne, 65307 Bad Schwalbach (DE)
(72) Erfinder:
(74) Vertreter: Blumbach, Kramer & Partner GbR

(56) Entgegenhaltungen:
- DE-A- 4 114 884

## Beschreibung

Die Erfindung bezieht sich auf eine Werkstückspannvorrichtung nach dem Oberbegriff des Anspruches 1.

Eine derartige Werkstückspannvorrichtung ist aus der DE-A 41 14 884 bekannt. Die bekannte Vorrichtung weist als Steuerorgan eine Betätigungsscheibe mit daran angebrachten Spannkolben auf, um jeweilige Vorsprünge von Spannbewegungselementen oder Spannkörpern gegen eine Anschlagsfläche der Betätigungsscheibe zu ziehen und so die Verschiebung der Spannkörper zu ermöglichen. Auf diese Weise schließt sich die Vorrichtung und die Spannbacken legen sich gleichmäßig an dem Werkstück an. Durch Anlegen von Spanndruck an die Spannkolben wird das zuvor gleichmäßig umfaßte Werkstück festgespannt. Während diese Vorrichtung gut und präzise arbeitet, gibt es Spann-Reaktionskräfte, die an der Betätigungsscheibe bemerkbar sind.

Bei einer weiteren bekannten Werkstückspannvorrichtung (EP 0 800 884 A2)arbeiten in Achsialrichtung geführte Bewegungskeile und in radialen Richtungen geführte Spannbacken zusammen, um sich sanft an das Werkstück anzulegen, bevor Spannkolben, die über eine Voreinstellstange beaufschlagt werden, das Werkstück endgültig einspannen.

Der Erfindung liegt deshalb die Aufgabe zugrunde, eine Werkstückspannvorrichtung der eingangs angegebenen Art anzugeben, wobei das Steuerorgan kaum Reaktionskräften aus dem Einspannvorgang unterliegt.

Die gestellte Aufgabe wird aufgrund der Ausbildung der Werkstückspannvorrichtung nach Anspruch 1 gelöst.

Erfindungsgemäß sind die Spannkolben in gehäusefesten Hohlräumen gelagert und über Fluidzuführungsleitungen beaufschlagbar, die über das Steuerorgan, eine Verschiebebetätigungseinrichtung, geführt sind und entweder mit Fluid ohne Druck, oder mit Nachführdruck, oder mit Spanndruck versorgt werden. Die Verschiebebetätigungseinrichtung ist somit in erster Linie ein Steuerfluidzuführungsorgan.

Daneben hat die Verschiebebetätigungseinrichtung auch die Funktion eines Anschlages für Vorsprünge der Spannbewegungselemente, die auf diese Weise gesteuert verschoben werden können, und zwar in die Ausgangsstellung, wobei die Verschiebekraft über die Verschiebebetätigungseinrichtung aufgebracht wird, oder in die Spannvorbereitungsstellung, wobei die Verschiebekraft von den Spannkolben aufgebracht wird.

Die Erfindung wird anhand der Zeichnung beschrieben. Dabei zeigt
- Fig. 1: einen Achsialschnitt durch ein Spannfutter in der Offenstellung;
- Fig. 2: in der Spannstellung;
- Fig. 3: in der Geschlossenstellung;
- Fig. 4: einen Achsialschnitt durch einen Spanndorn in der Offenstellung;
- Fig. 5: in der Spannstellung; und
- Fig. 6: in der Geschlossenstellung.

Die Hauptteile des Spannfutters sind ein Gehäuse 1, eine Anzahl Kolben 2, eine Anzahl Spannbewegungselemente 3 und ein Steuerorgan 4, das als Verschiebebetätigungseinrichtung bezeichnet werden kann. Das Gehäuse 1 umfaßt ein Hauptgehäuseteil 10, ein Einsatzgehäuse 11 und zwei Gehäusedeckel 12 und 13.

Hauptgehäuseteil 10 und Einsatzgehäuse können auch einstückig (integral) ausgebildet sein. Das Hauptgehäuseteil 10 weist einen Innenraum 14 und eine Reihe von Schrägführungen 15 auf, die als Bolzenbohrungen in den Innenraum 14 hineinführen. Der Innenraum 14 ist als Stufenbohrung ausgebildet, um eine Schieberbohrung 16 darzubieten. Das Steuerorgan 4 ist in einer weiteren Schieberbohrung 17 des Gehäusedeckels 12 gelagert. In den Innenraum 14 reicht noch ein nicht dargestellter Stift zur Drehsicherung des Steuerorganes 4 und ein Anschlagsmelder 18 hinein. Am Deckel 11 können Gegenlager 19 für das Werkstück W angebracht sein.

Das Einsatzgehäuse 11 ist in dem Innenraum 14 durch Schraubbolzen befestigt (sofern es nicht integral ausgebildet ist) und weist eine Bohrung 21 auf, die zu der Bohrung 16 genau fluchtet und den gleichen Durchmesser wie diese aufweist. In dem Einsatzgehäuse 11 sind eine Reihe von Zylinderräumen 20 untergebracht, die um die Bohrung 21 herum verteilt angeordnet sind, der Anzahl der Schrägbohrungen 15 entsprechen und in den gleichen radialen Ebenen angeordnet sind. Beispielsweise gibt es sechs Spannkolben 2 und sechs Spannbewegungselemente 3, die symmetrisch um die Verschiebebetätigungseinrichtung 4 herum angeordnet sind.

Die Spannbewegungselemente 3 bestehen jeweils aus einem Führungsbolzen 30, einem Schuh 31 und Spannbacken 32. Der Schuh 31 weist eine Oberseite 33 und eine Unterseite 34 auf und ragt so in den Raum 14 hinein, daß er mit einem zugehörigen Spannkolben 2 und der Verschiebebetätigungseinrichtung 4 zusammenarbeiten kann. Die Form der Spannbacken 32 ist an das festzuspannende Werkstück W angepaßt, welche zylindrische oder quasi zylindrische Flächen aufweist. Die Spannbacken 32 sind an ihrem Führungsbolzen 30 austauschbar befestigt.

Die Führungsbolzen 30 weisen einen Schlitz 35 auf, in welchen ein Führungsstein 36 eingreift, um eine begrenzte Schwenkbewegung sowie einen beschränkten Hub des Führungsbolzens 30 zu ermöglichen.

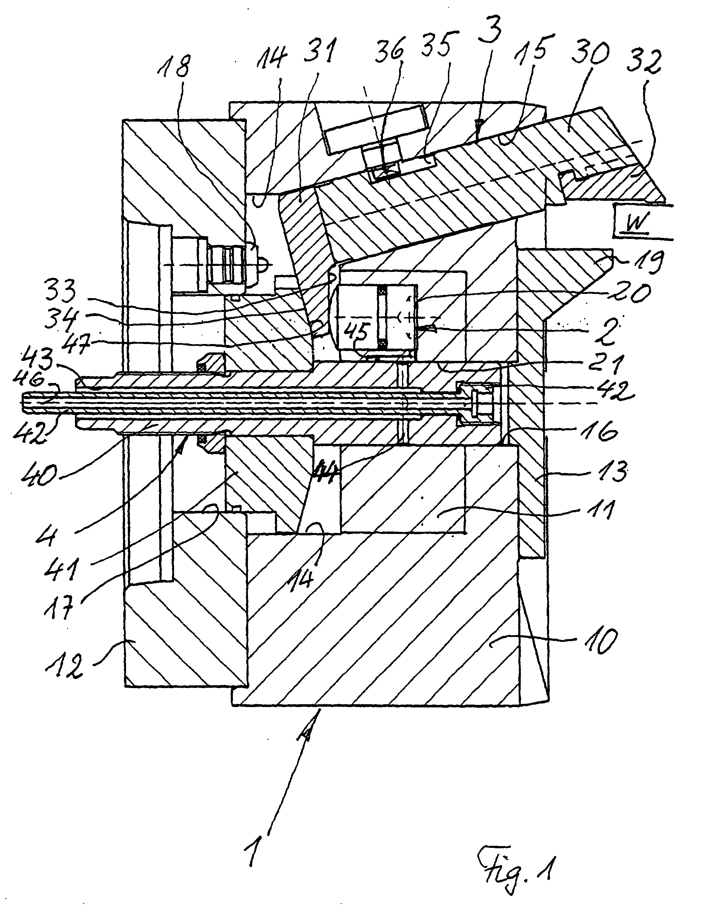

Das Steuerorgan bzw. die Verschiebebetätigungseinrichtung 4 enthält einen Schieber 40, eine daran befestigte Betätigungsscheibe 41 und einen Rohreinsatz 42. Der Schieber 40 ist beidseitig mit je einer Stufenbohrung versehen, um den Rohreinsatz 42 dichtend einzufügen und Platz für einen Fluidverteilkanal 43 zu bieten, von dem radiale Kanäle 44 abzweigen, wie es der Anzahl der Spannkolben 2 entspricht. Die jeweiligen Kanäle 44 münden in zugeordnete Kanäle 45, welche in jeweils einen Zylinderraum 20 hineinführen. Wie ersichtlich, weisen die Kanäle 45 einen längeren, dem Hub der Kolben 2 entsprechenden Längszweig und einen radialen Querzweig auf. Durch den Rohreinsatz 42 führt ein FluidKanal 46 in den Raum 16 hinein, so daß der Schieber 40 dKolbenwirkung in seiner Bewegung gesteuert werden kann. Die Kanäle 44, 45 sind durch Dichtungen zu den Räumen 14 und 16 abgedichtet. Der Fluidverteilkanal 43 steht mit einer nicht dargestellten Fluidsteuereinrichtung, die beispielsweise Hydrauliköl liefert, in Verbindung, wobei es drei Druckstufen gibt, nämlich den Druck null, ferner einen Nachführdruck, der gring ist, wie er zur Verschiebung der Spannbewegungselemente 3 ausreicht, und einen höheren Spanndruck zur Erzeugung der notwendigen Spannkräfte. Die Betätigungsscheibe 41 weist eine Schrägfläche 47 auf, die parallel zu der Unterseite 34 der Spannbetätigungselemente 3 verläuft, oder an dieser anliegt. Der Schieber 40 kann gegenüber dem Gehäuse 1 entlang der Bohrungen 16, 21 verschoben werden, um die Spannbewegungselemente 3 in ihre Ausgangslage (Fig. 1) mit geöffneten Spannbacken 32 zu führen.

Der Betrieb der Vorrichtung ist wie folgt: Bei der Rückführung der Spannbewegungselemente 3 in ihre Ausgangslage kommt die Betätigungsscheibe 41 mit ihrer Schrägfläche 47 in Berührung mit der Unterseite 34 der Spannbewegungselemente 3 und schiebt diese entlang der Führungen 15 in der Zeichnung nach rechts. Dabei werden auch die Kolben 2 mitgenommen und es wird Fluid aus den Zylinderräumen 20 über die Kanäle 45, 44, 43 in einen nicht dargestellten Vorratsraum verdrängt.

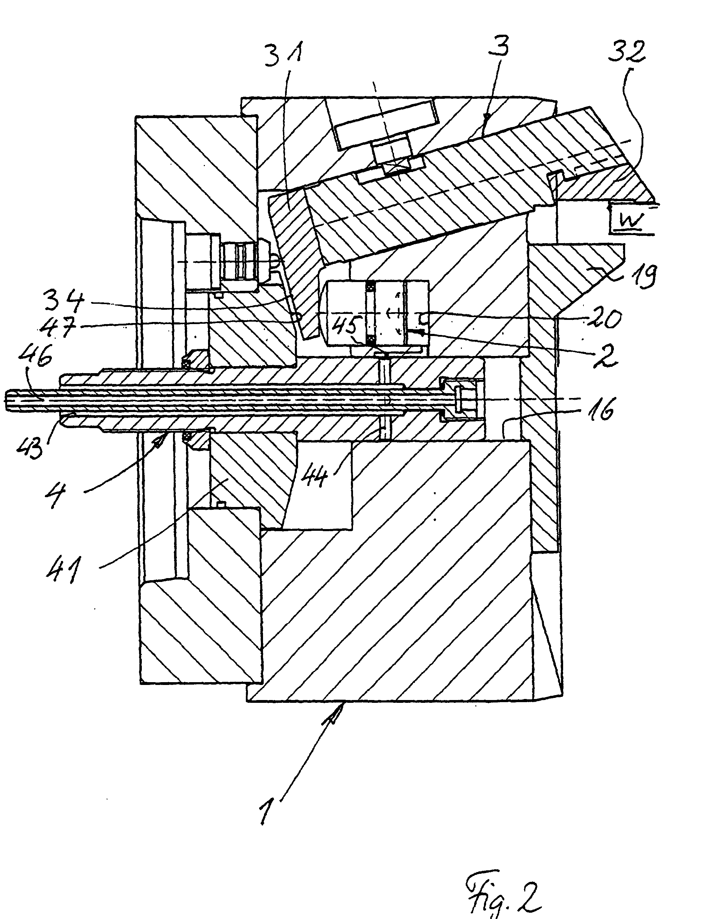

Die Spannvorbereitung ("Zentrierung") eines Werkstückes W ' erfolgt aus der besprochenen Ausgangsstellung (Fig. 1). Hierzu wird die Verschiebebetätigungseinrichtung 4 in der Zeichnung nach links verschoben und gleichzeitig wird Nachführungsdruck über die Kanäe 43, 44, 45 den jeweiligen Zylinderräumen 20 zugeführt. Die Kolben 2 verschieben die Spannbewegungselemente 3 in Anlage mit der Betätigungsscheibe 41, so daß die Verschiebebetätigungseinrichtung 4 im Gleichlauf mit den Kolben 2 und den Spannbewegungselementen 3 in der Zeichnung nach links wandert. Dabei nimmt der radiale Abstand der Spannbacken 32 voneinander ab und die Spannbacken kommen nacheinander am Werkstück W zur Anlage. Wenn dies eintritt, wird durch die aufgebaute Reaktionskraft verhindert, daß das betreffende Spannbewegungselement 3 relativ zu dem Gehäuse 1 weiterhin verschoben wird. Da sich die Verschiebebetätigungseinrichtung 4 in der Zeichnung weiter nach links bewegt, heben die Flächen 34 und 47 voneinander ab (Fig. 2) und der betreffende Kolben 2 wird in den zugehörigen Zylinderraum 20 hinein verschoben, was deshalb möglich ist, weil der zugeführte Nachführdruck des Fluids gering ist und sich das Fluid auch in verbleibende Zylinderräume umverteilen läßt.

Wenn alle Spannbacken 32 das Werkstück ergriffen haben, liegen sie an diesem mit dem vom Nachführdruck bestimmten, geringeren Druck an, der wegen der Verteilung der Spannbacken gleichmäßig um den Umfang des Werkstückes herum wirkt.

Nunmehr wird der höhere Spanndruck über die Kanäle 43, 44 und 45 den Spannzylindern 20 zugeführt, wodurch die Spannkolben 2 die Spannbewegungselemente 3 fest anziehen und das Werkstück W festgespannt wird. Da die Festspannung des Werkstückes von allen Seiten mit der gleichen Kraft erfolgt, wird das Werkstück zentrisch eingespannt, d.h. es erfolgt keine seitliche Verschiebung des Werkstückes beim Einspannungsvorgang.

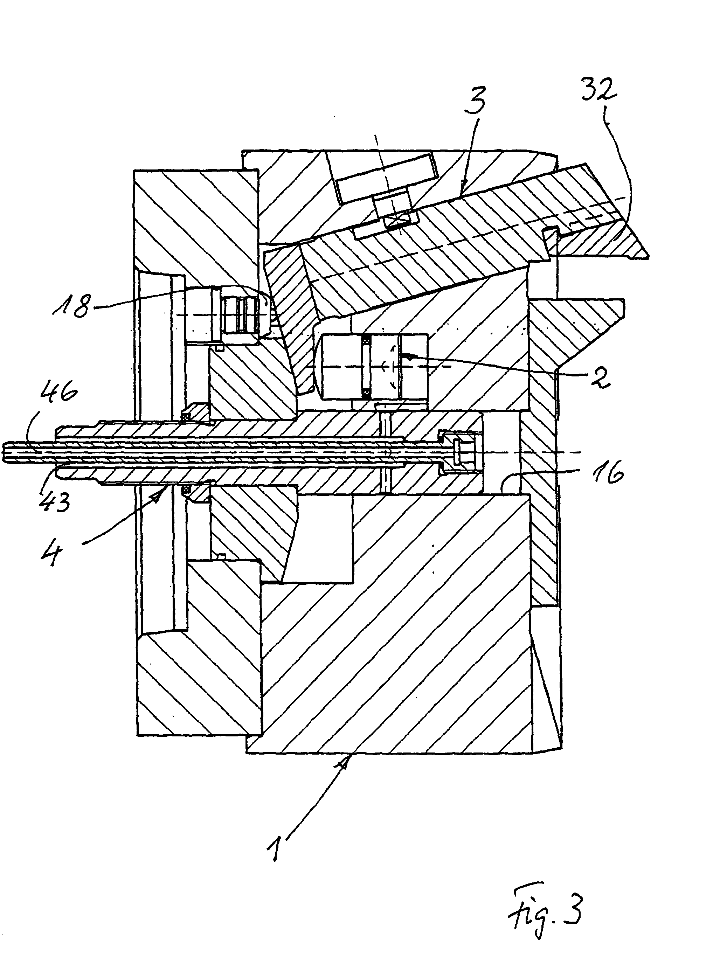

Fig. 3 zeigt die Geschlossenstellung, in welcher die Anschlagsmelder 18 ansprechen, um den Spanndruck abzuschalten, wenn einer der Spannbacken 32 nicht gegriffen hat.

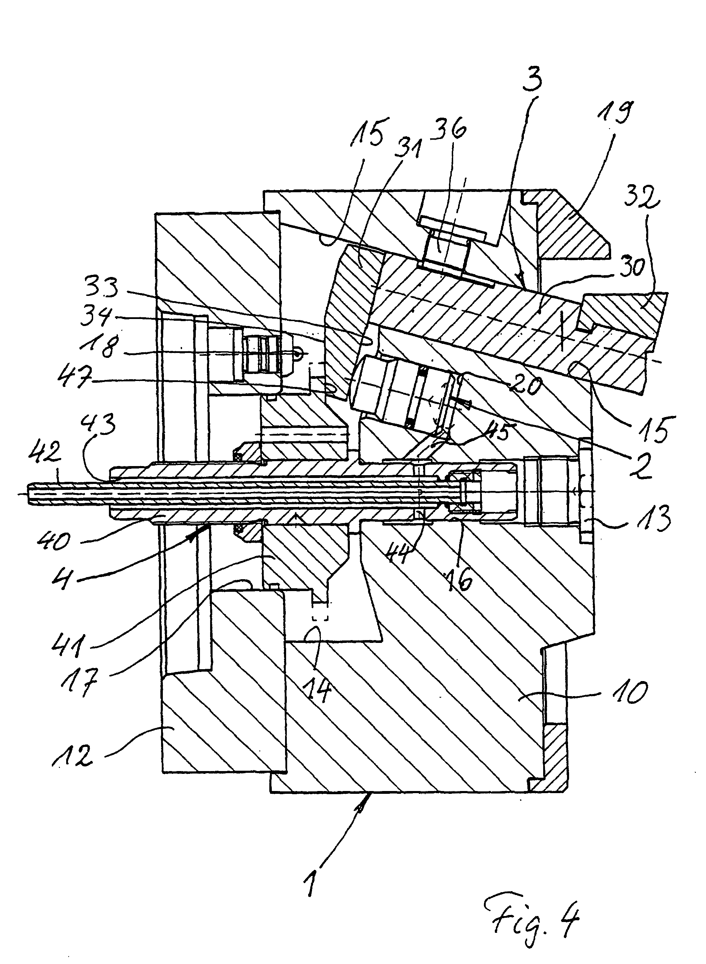

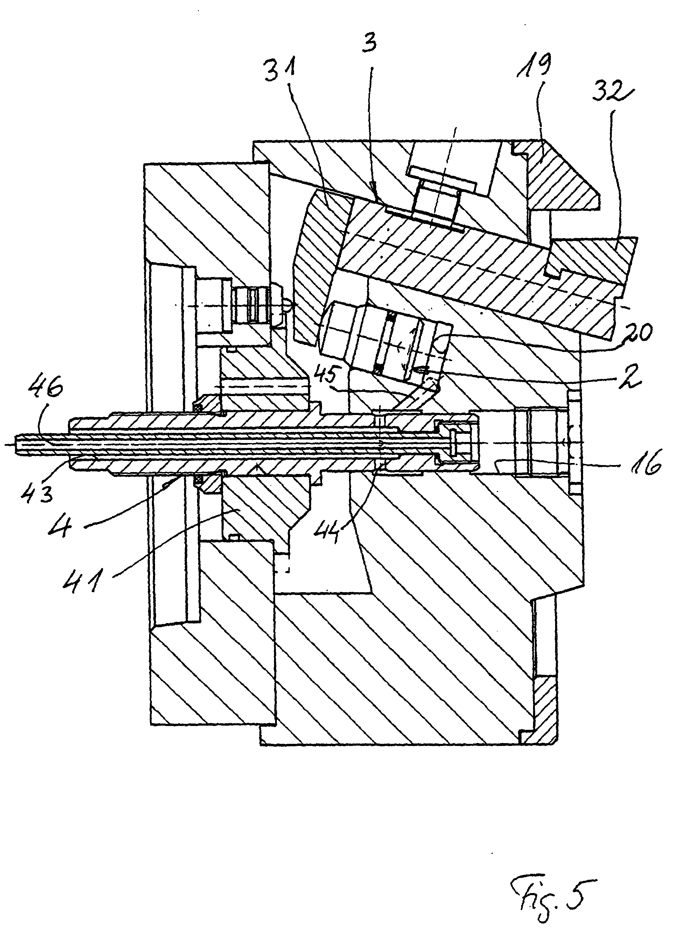

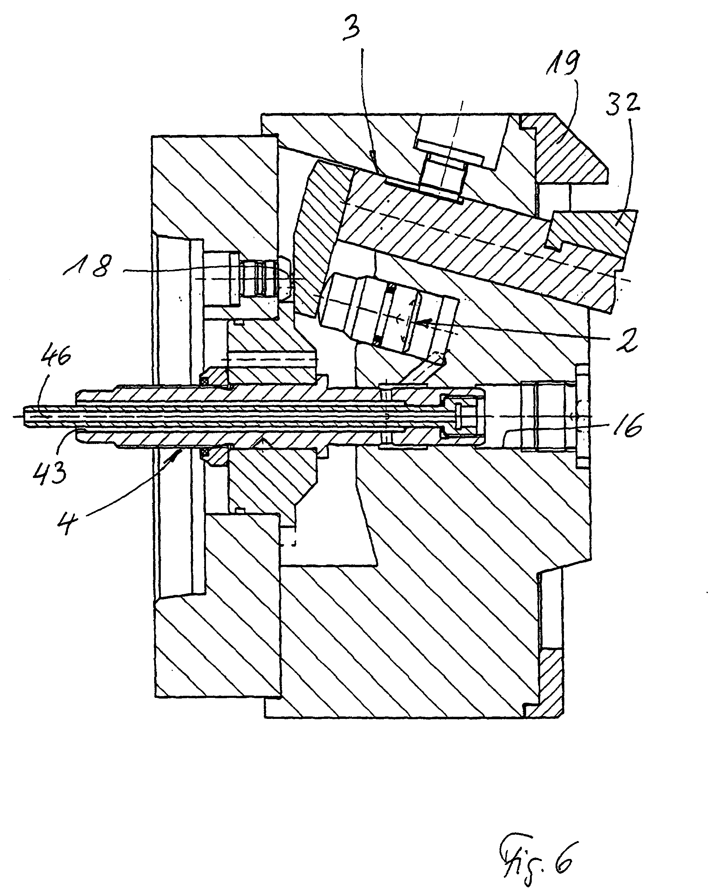

Die Werkstückspannvorrichtung kann auch als Spanndorn (Fig. 4, 5, 6) ausgebildet werden, um hohlzylindrische oder quasi hohlzylindrische Gegenstände von innen her zu spannen. Sich entsprechende Teile sind mit gleichen Bezugszeichen belegt. Folgende Unterschiede sind zu beobachten:
Die Neigung der Führungen 15 wird auf einem Kegelmantel angeordnet, dessen Spitze in der Zeichnung rechts ist und die Spannbacken 32 werden außen an den Spannbewegungselementen 3 angebracht. Die Kolben 2 sind auf einem Kegelmantel angeordnet, der den gleichen Öffnungswinkel hat wie der Kegelmantel der Führungen 3 (möglich ist auch eine parallele Anordnung wie beim Ausführungsbeispiel der Fig. 1 bis 3). Es versteht sich, daß dabei auch die Neigungen der Flächen 33,34 und 47 angepaßt werden müssen.

Der Betrieb erfolgt in prinzipiell der gleichen Weise wie im Ausführungsbeispiel der Fig. 1 bis 3, worauf verwiesen wird.

## Patentansprüche

1. Werkstückspannvorrichtung mit folgenden Merkmalen:
ein Gehäuse (1) mit Schrägführungen (15), welche, in radialen Ebenen gesehen, geneigt zur Achsrichtung verlaufen;
eine Anzahl Spannbewegungselemente (3), die entlang der Schrägführungen (15) verschiebbar sind und Spannbacken (32) zum Einspannen eines Werkstückes (W) tragen;
eine Anzahl Spannkolben (2), die jeweils einem Spannbewegungselement (3) zugeordnet sind und die Einspannung des Werkstückes bewirken;
eine Verschiebebetätigungseinrichtung (4), welche die Spannbewegungselemente (3) in jeweils gelöste Stellungen und in Spannvorbereitungsstellungen zu bewegen ermöglicht; **gekennzeichnet durch** folgende Ausbildung:
die Spannkolben (2) sind in gehäusefesten Zylinderräumen (20) gelagert und über Fluidzuführungskanälen (43,44,45) beaufschlagbar, die teilweise (43,44) über die Verschiebebetätigungseinrichtung (4) laufen und den gehäusefesten Zylinderräumen (20) Steuerfluid entweder ohne Druck oder mit Nachführdruck oder mit Spanndruck zuzuführen ermöglichen.

2. Wertstückspannvorrichtung nach Anspruch 1, **dadurch gekennzeichnet, daß** die Verschiebebetätigungseinrichtung (4) einen Schieber (40) mit Fluidverteilungskanälen (43, 44) aufweist, um das Steuerfluid gehäusefesten Kanälen (45) zuzuführen, die jeweils in die Zylinderräume (20) hineinführen.

3. Werkstückspannvorrichtung nach Anspruch 1 oder 2, **dadurch gekennzeichnet, daß** die Verschiebebetätigungseinrichtung (4) eine Betätigungsscheibe (41) aufweist, die mit jeweiligen Füßen (31) der Spannbewegungslemente (3) zusammen arbeiten.

4. Werkstückspannvorrichtung nach einem der Ansprüche 1 bis 3, **dadurch gekennzeichnet, daß** die Schrägführungen (15) als Bolzenbohrungen ausgebildet sind.

5. Werkstückspannvorrichtung nach Anspruch 4, **dadurch gekennzeichnet, daß** den Spannbewegungselementen (3) Begrenzungselemente (35,36) zugeordnet sind, welche das Ausmaß der Hubbewegung und der Schwenkbewegung begrenzen.

6. Werkstückspannvorrichtung nach einem der Ansprüche 1 bis 5, **gekennzeichnet durch** eine Fluidsteuereinrichtung, die zur Verschiebung der Spannbewegungselemente (3) in ihrer Ausgangsstellung den Zylinderräumen (20) druckloses Fluid zuführt und die Verschiebebetätigungseinrichtung (4) in einer Richtung betätigt, um Fluid aus den Zylinderräumen (20) zu verdrängen,
die zur Spannvorbereitung den Zylinderräumen (20) Fluid bei Nachführdruck zuführt, um die Spannbewegungselemente (3) in Anlage an die Verschiebebetätigungseinrichtung (4) zu halten, bis die Spannbacken (32) an dem Werkstück (W) angreifen, wonach die Spannbewegungselemente (3) nacheinander von der Verschiebebetätigungseinrichtung (4) abheben, und
die, wenn alle Spannbewegungselemente (3) von der Verschiebebetätigungseinrichtung abgehoben haben, den Zylinderräumen (20) Spanndruck zuführt.

7. Werkstückspannvorrichtung nach einem der Ansprüche 1 bis 6, als Spannfutter, **dadurch gekennzeichnet, daß** die Spannbewegungselemente (3) auf einem Kegelmantel liegen, der sich zum Werkstück (W) hin öffnet, und daß ein Gehäusedeckel (13) Widerlagerausbildungen (19) in Anpassung an das einzuspannende Werkstück (W) aufweist.

8. Werkstückspannvorrichtung nach einem der Ansprüche 1 bis 6, als Spanndorn, **dadurch gekennzeichnet, daß** die Spannbewegungselemente (3) auf einem Kegelmantel liegen, dessen Spitze zum Werkstück (W) hin weist, und daß am Gehäuse (10) Widerlagerausbildungen (19) in Anpassung an das einzuspannende Werkstück (W) angebracht sind.

## Claims

1. A workpiece clamping device having the following features:
a casing (1) with sloping guides (15) which, viewed in radial planes, extend at an angle to the axial direction;
a number of moving clamping elements (3) movable along the sloping guides (15) and bearing jaws (32) for clamping a workpiece (W);
a number of clamping pistons (2) each associated with a respective moving clamping element (3) and adapted to clamp the workpiece, and
a movement actuating device (4) for moving the moving clamping elements (3) into released positions or into positions in preparation for clamping, **characterised by** the following construction:
the clamping pistons (2) are mounted in cylinder chambers (20) fixed to the casing and are supplied via fluid supply ducts (33, 34, 35) which partly (43, 44) extend via the movement actuating device (4) and enable the cylinder chambers (20) fixed to the casing to be supplied with control fluid, either without pressure or with follow-up pressure or with clamping pressure.

2. A workpiece clamping device according to claim 1, **characterised in that** the movement actuating device (4) comprises a slide (40) with fluid distribution channels (43, 44) for supplying the control fluid to the ducts (45) fixed to the casing, each duct leading into a respective cylinder chamber (20).

3. A workpiece clamping device according to claim 1 or 2, **characterised in that** the movement actuating device (4) comprises an actuating disc (41) cooperating with respective feet (31) of the moving clamping elements (3).

4. A workpiece clamping device according to any of claims 1 to 3, **characterised in that** the sloping guides (15) are in the form of pin bores.

5. A workpiece clamping device according to claim 4, **characterised in that** the moving clamping elements (3) are associated with limiting elements (35, 36) which limit the extent of the stroke and of the pivoting motion.

6. A workpiece clamping device according to any of claims 1 to 5, **characterised by** a fluid control device which, in order to move the moving clamping elements (3) in their starting position, supplies fluid without pressure to the cylinder chambers (20) and actuates the movement actuating device (4) in a direction for displacing fluid from the cylinder chambers (2),
in preparation for clamping, the fluid control device supplies the cylinder chambers (20) with fluid at the follow-up pressure in order to bring the moving clamping elements (3) against the movement actuating device (4) until the jaws (32) engage the workpiece (W), whereupon the moving clamping elements (3) are successively lifted off the movement actuating device (4), and
when all the moving clamping elements (3) have been lifted off the movement actuating device, the fluid control device supplies clamping pressure to the cylinder chambers (20).

7. A workpiece clamping device according to any of claims 1 to 6 and in the form of a chuck,
**characterised in that** the moving clamping elements (3) lie on the surface of a cone which opens towards the workpiece (W), and **in that** a casing cover (13) comprises abutment structures (19) adapted to the workpiece (W) for clamping.

8. A workpiece clamping device according to any of claims 1 to 6 and in the form of a mandrel, **characterised in that** the moving clamping elements (3) lie on the surface of a cone, the point of which extends towards the workpiece (W), and **in that** abutment structures (19) adapted to the workpiece (W) for clamping are formed on the casing (10).

## Revendications

1. Dispositif de serrage d'une pièce à usiner, présentant les caractéristiques suivantes:
un corps (1) contenant des guides obliques (15) qui, vus dans des plans radiaux, s'étendent selon une inclinaison par rapport au sens axial;
un nombre d'éléments mobiles de serrage (3) coulissant le long des guides obliques (15) et portant des mors (32) permettant le serrage d'une pièce à usiner (W);
un nombre de pistons de serrage (2) respectivement associés à un élément mobile de serrage (3), qui provoquent le serrage de la pièce à usiner;
un dispositif actionneur de déplacement en translation (4) qui permet d'amener les éléments mobiles de serrage (3) respectivement en position relâchée et en position de préserrage; **caractérisé par** la configuration suivante:
les pistons de serrage (2) sont logés dans des chambres cylindriques (20) solidaires du corps et peuvent être mis sous pression à travers des canaux d'alimentation en fluide (43, 44, 45) qui s'étendent partiellement (43, 44) à travers le dispositif actionneur de déplacement en translation (4) et permettent d'acheminer du fluide de commande soit sans pression, soit sous pression de maintien d'engagement, soit sous pression de serrage, jusqu'aux chambres cylindriques (20) solidaires du corps.

2. Dispositif de serrage de pièces à usiner selon la revendication 1, **caractérisé en ce que** le dispositif actionneur de déplacement en translation (4) comporte un poussoir (40) contenant des canaux (43, 44) de distribution de fluide pour acheminer du fluide de commande dans des canaux (45) solidaires du corps, qui débouchent dans les chambres cylindriques respectives (20).

3. Dispositif de serrage de pièces à usiner selon la revendication 1 ou 2, **caractérisé en ce que** le dispositif actionneur de déplacement en translation (4) comporte un disque actionneur (41) qui coopère avec les talons respectifs (31) des éléments mobiles de serrage (3).

4. Dispositif de serrage de pièces à usiner selon l'une des revendications 1 à 3, **caractérisé en ce que** les guides obliques (15) sont réalisés sous forme d'alésages pour axes.

5. Dispositif de serrage de pièces à usiner selon la revendication 4, **caractérisé en ce que** des éléments limiteurs (35, 36), qui limitent l'amplitude de la course en translation et le pivotement, sont associés aux éléments mobiles de serrage (3).

6. Dispositif de serrage de pièces à usiner selon l'une des revendications 1 à 5, **caractérisé par**
un dispositif de commande du fluide qui, pour déplacer les éléments mobiles de serrage (3) dans leur position de départ, amène du fluide sans pression aux chambres cylindriques (20), et actionne le dispositif actionneur de déplacement en translation (4) dans une direction qui chasse du fluide hors des chambres cylindriques (20);
qui, pour préparer le serrage, achemine du fluide sous pression de maintien d'engagement aux chambres cylindriques (20), de manière à maintenir les éléments mobiles de serrage (3) en contact avec le dispositif actionneur de déplacement en translation (4) jusqu'à ce que les mors (32) entrent en engagement avec la pièce à usiner (W), ce après quoi les éléments mobiles de serrage (3) décollent l'un après l'autre du dispositif actionneur de déplacement en translation (4);
et qui, lorsque tous les éléments mobiles de serrage (3) ont décollé du dispositif actionneur de déplacement en translation, achemine du fluide sous pression de serrage aux chambres cylindriques (20).

7. Dispositif de serrage de pièces à usiner selon l'une des revendications 1 à 6, formant un mandrin de serrage extérieur, **caractérisé en ce que** les éléments mobiles de serrage (3) se situent dans un plan d'enveloppe conique qui s'ouvre en direction de la pièce à usiner (W), et **en ce qu'**un couvercle (13) du corps comporte des formations de contre-butées (19) adaptées à la pièce à usiner (W) à serrer.

8. Dispositif de serrage de pièces à usiner selon l'une des revendications 1 à 6, formant un mandrin de serrage intérieur, **caractérisé en ce que** les éléments mobiles de serrage (3) se situent dans un plan d'enveloppe conique dont le sommet est dirigé vers la pièce à usiner (W), et **en ce que** le corps (10) comporte des formations de contre-butées (19) adaptées à la pièce à usiner (W) à serrer.
